(19) Europäisches Patentamt / European Patent Office / Office européen des brevets

(11) **EP 3 217 111 B1**

(12) **EUROPEAN PATENT SPECIFICATION**

(45) Date of publication and mention
of the grant of the patent:
**31.03.2021 Bulletin 2021/13**

(51) Int Cl.:
*F24F 11/30* (2018.01)   *F24F 130/20* (2018.01)
*F24F 110/00* (2018.01)   *G01J 1/42* (2006.01)
*G01J 1/04* (2006.01)

(21) Application number: **17158292.7**

(22) Date of filing: **28.02.2017**

(54) **CONTROL SYSTEM FOR AIR CONDITIONING SYSTEMS**

STEUERUNGSSYSTEM FÜR KLIMAANLAGEN

SYSTÈME DE CONTRÔLE-COMMANDE DESTINÉ À DES SYSTÈMES DE CONDITIONNEMENT D'AIR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.03.2016 IT UA20161555**

(43) Date of publication of application:
**13.09.2017 Bulletin 2017/37**

(73) Proprietor: **Reale Immobili S.p.A.**
**10122 Torino (IT)**

(72) Inventor: **BRUNO, Franco**
**I-20090 BUCCINASCO (MI) (IT)**

(74) Representative: **Postiglione, Ferruccio et al**
**Praxi Intellectual Property S.p.A.**
**Via Mario Pagano, 69/A**
**20145 Milano (IT)**

(56) References cited:
WO-A1-2015/045609   CZ-B6- 303 151
DE-A1- 4 443 733   FR-A1- 3 007 148
US-A1- 2004 245 351   US-A1- 2012 056 090
US-A1- 2012 089 257   US-A1- 2013 066 585

## Description

### Field of the invention

The present invention relates to the monitoring and control of air-conditioning systems.

### Prior art

As regards air-conditioning systems (for heating or cooling), energy saving is a very common problem. An efficient management of air-conditioning costs is a very important aspect particularly for managers of large buildings and/or of several buildings.

Moreover such problem is particularly critical in case of buildings constructed in former years, namely when energy consumption and environmental issues did not have the current importance.

The document EP-A-2065655 describes a process and a device for energy saving by scheduling of the energy supplied for air-conditioning, according to the previous and/or expected power consumptions and the knowledge in advance of weather data.

The document EP-A-1866575 describes another method for controlling climatic conditions in a building.

Document US-A-2004/245351 describes a control system monitoring and influencing physical conditions of an architectural setting. The system described by this document refers to the conditioning of a space (such as a private space or a community space) containing one or more occupants. Said space is provided with sensors for measuring occupant's physiological or behavioral parameters.

The aim of the present invention is to provide a control system capable of reducing the consumption of used primary energy compared to what can be obtained by conventional techniques.

The aim of the present invention is achieved by a control system as defined by the independent claim 1 and by preferred embodiments thereof described by the dependent claims 2-9.

Particularly, with reference to dependent claim 5, the Applicant has found that also lighting systems in buildings need control techniques taking energy saving into account in a better way.

### Brief description of the figures

The present invention is described below in details, by way of example and not as a limitation, with reference to annexed drawings, in which:

Fig. 1 schematically is an air conditioning system comprising a control system and an air conditioning plant, according to one embodiment;
Fig. 2 is a particular embodiment of said control system, shown in front view (Fig.2a), side view (Fig.2b) and top view (Fig. 2c);
Fig. 3 is a curve of the trend of sun declination, due to inclination of the ecliptic;
Fig. 4 is a curve of the power of extra-atmospheric solar radiation variable during the year depending on the distance of Earth from the sun;
Fig. 5 is a curve representing the elevation of the sun at the horizon;
Fig. 6 is a curve representing the thickness of the "air mass" passed through by the sun;
Fig. 7 is some curves about the simulation of solar radiation in different conditions;
Fig. 8 is the trend of radiant temperature of the clear sky as a function of air temperature;
Fig. 9 is the trend of the radiant temperature of clear sky as a function of air humidity;
Fig. 10 is several thermoregulation curves of a radiator heating thermal plant related to different global radiation and net radiation values;
Fig. 11 is two heating/turn-off cycles of a thermoregulation plant related to two different values of the time constant;
Fig. 12 is a curve showing the trend of relative humidity as a function of the change of air temperature;
Fig. 13 is graphs of the transmission factor with different inclinations of the solar radiation with respect to the horizon.
Fig. 14 is a representation of solar energy spectrum at ground and extra-atmospheric one.

### Detailed description

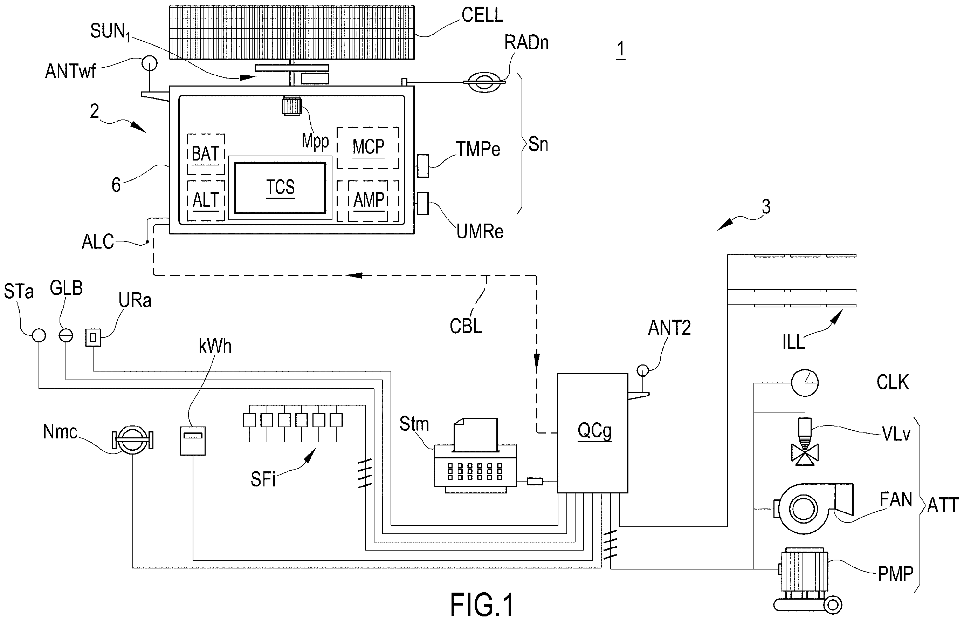

Fig.1 schematically shows an air conditioning system 1 comprising at least one control system 2 and at least one air conditioning plant 3. The air conditioning plant 3 allows a body, not shown, to be air-conditioned (that is heating or cooling). For example the body to be air-conditioned is a building for residential, industrial, commercial use and service industry use in general, hospital use.

Moreover the air conditioning plant 3 allows air conditioning to be performed also in agricultural field, and it can be applied for controlling weather conditions both in open field and in controlled closed environments, such as for example greenhouses.

Advantageously the air conditioning plant 3 can also comprise a lighting system for lighting the inside of the building or for lighting areas outside it, or also for lighting an open field in agricultural sector. Below, as an example, reference is made to the case of a building to be air conditioned and lighted.

The air conditioning plant 3 shown in Fig.1 comprises, for example, a plant control module QCg and one or more actuators ATT for air conditioning such as, for example: a water pump PMP, a servo controlled valve VLV, a fan FAN. As regards lighting, the plant 3 can be equipped with a plurality of lighting elements ILL (for example LEDs).

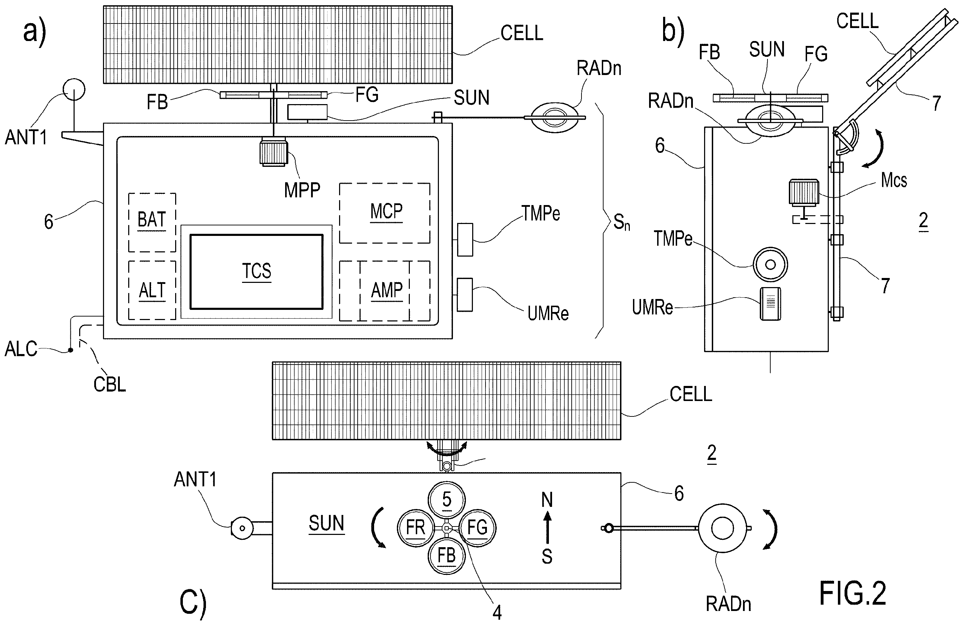

The control system 2, shown also in fig.2, comprises a plurality of sensors Sn and a control-command module MCP. In the control-command module MCP, such as for example a microprocessor, there is software representative of regulation laws on the basis of which the control-command module MCP sends command signals to the plant control module QCg that controls the actuators ATT of the air conditioning plant 3.

The plurality of sensors Sn allows physical parameters to be detected regarding the building to be air-conditioned and/or the environment surrounding the building and allows corresponding detection signals to be generated which are supplied to the control-command module MCP. The control-command module MCP can modify the regulation laws depending on the detection signals from the plurality of sensors Sn and can generate corresponding command signals to be supplied to the plant control module QCg.

The plurality of sensors Sn comprises a net radiometer RADn arranged for providing a first detection signal representing a difference between a first electromagnetic radiation from the sky and a second electromagnetic radiation from the building to be air conditioned. The net radiometer is a known device: generally the net radiometer provides the net radiation, namely the difference between the radiation coming to the upper surface and the radiation on the lower surface of the employed net radiometer. The upper receiving surface measures the direct solar radiation plus the diffuse one and the radiation at long wavelengths emitted from the sky (clouds), while the lower receiving surface measures the solar radiation reflected from the ground (albedo) and the radiation at long wavelengths emitted from the earth.

In this case the net radiometer RADn employed, by providing the difference between radiations, makes it possible to know the actual energy the building exchanges with the sky over time. Actually the balance can be positive or negative depending on surface temperatures of curtain walls of the building (e.g.: façade, roof, terraces etc.) and the radiant temperature of the sky.

By means of the measurements provided by the net radiometer RADn, the control-command module MCP can modify a regulation law preset on estimated data. For example on the basis of data provided by the net radiometer RADn the control-command module MCP can define a different delivery temperature of water of the air conditioning plant 3 or can reprogram turn-on and/or turn-off and/or attenuation time of actuators ATT, with reference to energy actually stored or dispersed by the building.

It is important to note that the net radiometer RADn allows specific thermoregulation laws to be generated even during night hours, when solar radiation is absent. During the night, with no sun, the net radiometer RADn is the only tool able to provide energy information about sky-building interaction.

With reference again to the plurality of sensors Sn they preferably comprise: a temperature probe TMPe, a filter solar probe SUN, and a relative humidity probe UMRe.

The temperature probe TMPe is capable of detecting the temperature of external air; particularly the measured temperature is the so called "dry-bulb" temperature.

The relative humidity probe UMRe is capable of measuring the relative humidity of external air: the fact of knowing the relative humidity, together with the external temperature, allows an algorithm resident in the control-command module MCP to calculate the real amount of water in the air.

The solar probe SUN (known also as pyranometer) is preferably mounted stationary on the horizontal surface and is able to read intensity of solar radiation, expressed in $W/m^2$. Moreover the control-command module MCP allows data provided by the solar probe SUN to be compared with data obtained by a radiation model provided for verification and validation purposes, measured on horizontal surface, at any hour of the day throughout all the year in daytime period.

The control-command module MCP is configured to combine information from the solar probe SUN and those from the net radiometer RADn and to obtain data about radiant energy actually retained by the building. Particularly information provided by the solar probe SUN are corrected by a feedback of the control process, on the basis of data received from the net radiometer RADn. It has to be noted that the global radiation provided by the solar probe by itself does not indicate expressly how much incoming radiant energy is actually retained by the air conditioned building since the latter depends on the characteristics of the curtain walls thereof, these latter parameters being unknown to the solar probe.

Moreover (fig.2) advantageously there are provided: a red optical filter FR, a green optical filter FG and a blue optical filter FB mounted on a rotatable supporting structure 4. Such filters FB, FG, FR (for instance multiplex optical filters) are able to rotate, by the supporting structure 4 above the solar probe SUN on horizontal surface. Filters FR, FG and FB (red, green, blue) allow the spectral distribution of the radiation to be known by the solar probe SUN, which is also expressed as

The calculation of the spectral composition of light allows the control-command module MCP to generate command signals that allow lighting elements ILL to generate light having such spectral components to obtain both the desired lightening and energy saving.

The supporting structure 4 is driven for example by a stepping motor Mpp, able to carry out periodical rotation of 60°, in the specific case when three housed filters are used (FR, FG, FB) and may have a fourth support 5 without filters such to read the global solar radiation without filtering. The measurement of the global daytime solar radiation therefore comprises the direct one and the diffuse one, expressed in

An algorithm resident in the control-command module MCP is able, by using information about quality of external air (e.g.: relative humidity), to analyze the spectral composition of light and therefore to determine quality thereof, specifically energy components R-G-B (Red, Green, Blue).

The calculation of the spectral composition of light allows the control-command module MCP to generate command signals that allow lighting elements ILL to generate light having such spectral components to obtain both the desired lightening and energy saving.

The solar probe SUN is used for the purposes of air conditioning and of lighting system.

With reference again to fig.2, it has to be noted that the control-command module MCP is, for example, housed in a container 6 that can house other components, such as for example: storage batteries BAT, one or more power supplies ALM, signal amplifier AMP and a monitor TCS of the touch screen type for reading, controlling and managing the system.

Such TCS monitor can be protected against external weather agents by an openable transparent door and such to guarantee a protection level able to meet the current rules. Apparatuses housed in the container 6 can be power supplied by a connection ALC to an electric network.

The container 6 can also house the following components (not shown): one or more transformers; a heating element for controlling the inner temperature of the container 6 in winter conditions; a fan for controlling ambient temperature in summer conditions and with a network card to allow communication with one or more remote control boards of lighting electric and thermomechanical systems.

Advantageously the control system 2 can also be provided with a photovoltaic solar panel CELL comprising for example silicon cells, with area of some square decimeters, to allow apparatuses housed in the container 6 to be powered.

The solar panel CELL is secured to the container 6 by a mounting structure 7 able to cause the panel to rotate every day of the year during the day period to follow the apparent path of the sun. The rotation is operated by a stepless motor Mcs (fig.2b), whose speed is programmed by a relevant algorithm resident in the control-command module MCP, that at the end of each day brings the panel in the start rotation position of the following day.

The control system 2 preferably is oriented in South-North direction to allow the photovoltaic solar panel CELL to use as much daily insolation as possible. The inclination ("tilt") of the photovoltaic panel CELL with respect to the horizontal surface considers the latitude of the place of installation and for example can be changed even only manually month by month. If it is considered appropriate it is possible to automate the process by equipping the control system 2 with a further stepping motor able to modify each day the "tilt" angle in relation to the change in the sun declination.

The control system 2 can exchange signals bearing commands, information and/or data with the plant control module QCg by means of a wireless communication (based on a first antenna ANT1 and a second antenna ANT2, fig.1) or by a cable connection CBL.

Other components of the air conditioning plant 3 (fig.1) for example can be: fluid probes SFi (for example for measuring water temperature), a natural gas meter Nmc, electricity meter kWh, a room temperature probe STa, an ambient relative humidity probe URa. The plant control module QCg which is a general control board is connected, according to an example, also to a clock CLK and a printer Stm.

It has to be noted that the control system 2 can also control several air conditioning and/or lighting plants 3 (in a network) also belonging to buildings and activities faraway from each other, in different cities and/or regions. In this case, the control system 2 can be arranged such to ask to such plurality of plants not to overcome a daily overall consumption target calculated on the basis of sampled and stored historical data.

Examples of operation

Here below some examples of operations of the control system 2 and particularly of the control-command module MCP will be disclosed.

## 1. Estimate of solar radiation

Consider the solar probe SUN. As already mentioned above, the control-command module MCP allows data provided by the solar probe SUN to be compared with data obtained from a radiation model provided for verification and validation purposes, measured on horizontal surface, at any hour of the day throughout the whole year during daytime.

The control-command module MCP by a relevant algorithm carries out the simulation of the calculation of solar radiation and of parameters related thereto.

Radiation of the reference model is calculated under several conditions: extra-terrestrial atmosphere, at ground in a clean atmosphere (e.g.: country) and in various pollution conditions (for example urban area).

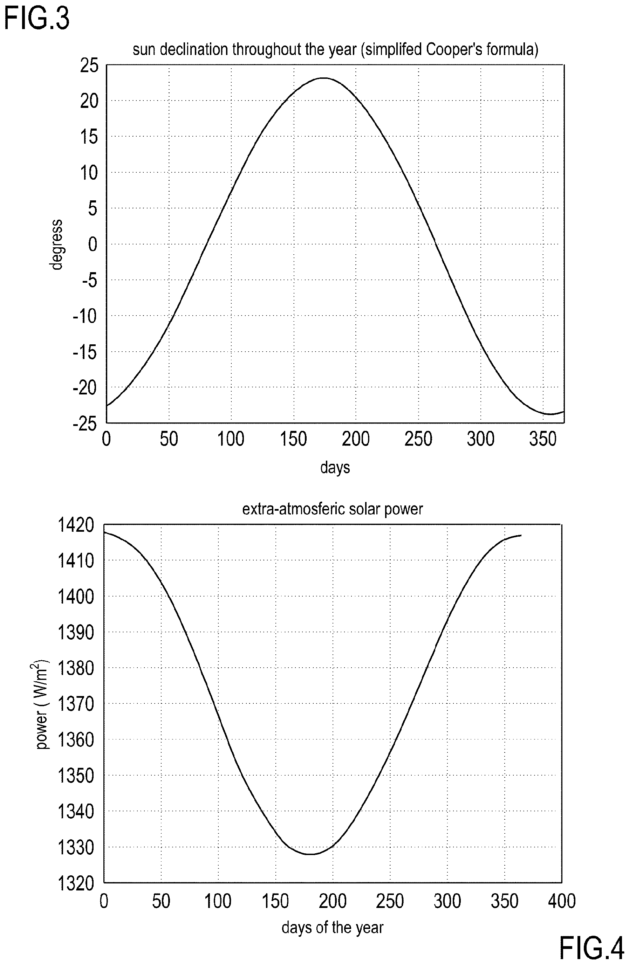

Figures 3 to 7 show some graphs developed by the algorithm simulating the radiation. Fig.3 shows the trend of sun declination, due to the earth ecliptic inclination, in the whole year obtained by the simplified Cooper formula.

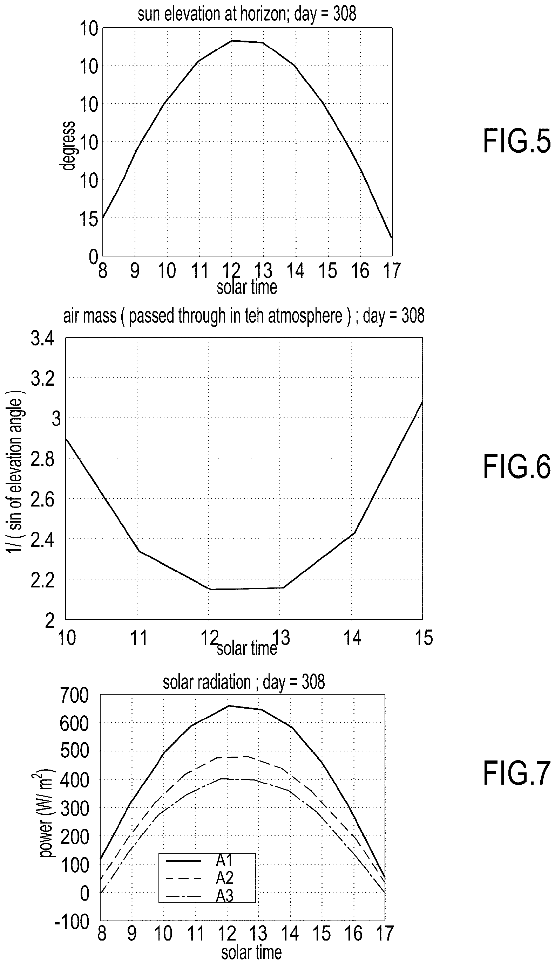

Fig.4 shows the power of the extra-atmospheric solar radiation variable during the year depending on the distance of the earth from the sun, therefore characterized by a higher power at the perihelion and a lower power at the aphelion. Fig.5 shows the elevation of the sun on the horizon, that in this specific case was simulated on the 4th November of a non-leap year. Fig.6 shows the thickness of the so called "air mass" passed through by the sun in the various hours of the day, which is minimum at 12.00.

Fig.7 shows the simulation of extra-atmospheric solar radiation (curve A1), radiation at ground in clean atmosphere (curve A2) and at the ground under polluted atmosphere, 400p/cm³ (curve A3). As regards curves of fig.7 it has to be noted that these have been always referred to the day considered for the extra-atmospheric radiation, however always considering, for the exact calculation of the solar radiation, the difference between apparent solar time (solar hour) and local time (local standard time) derivable from the standard equation of time, shown below:

$$E = 9.87 \cdot sin(2 \cdot B) - 7.53 \cdot \cos(B) - 1.5 \cdot sin(B)$$

with:

$E$ = equation of time, expressed in minutes;

$B = 2 \cdot \pi \ (N - 81)/ \ 364$, expressed in radians and N= progressive number of the day of the year. Correction is due to the difference in longitude between the local meridian and the local meridian the hour read on the clock refers to, to the eccentricity of the Earth's orbit with respect to the sun and the inclination of the ecliptic, namely the plane of the orbit.

The comparison performed by the control-command module MCP between measured radiation at ground and theoretical radiation at ground in clean atmosphere allows also the possible level of pollution at ground to be estimated and allows such data to be used for following spectrum analysis of sun light.

The automatic calculation of theoretical insolation hours allows the algorithm to calculate the possible maximum theoretical solar thermal input, useful for programming criteria controlling thermoregulation.

## 2. Estimate of net radiation and selection of laws of regulation

In addition to what already described as regards the net radiometer RADn, it has to be noted that in the control-command module MCP there is an algorithm controlling and verifying the measured net radiation, (it being further able to replace the direct measurement in case of failure of the net radiometer).

For the purposes of such estimate of the net radiation, sky is considered in the model as a blackbody and therefore thermal exchange $Q$ between building and sky can be represented by the traditional formula, referred to a unit surface:

$$Q = \varepsilon \cdot A \cdot \sigma \cdot \left( T_{sky}^4 - T^4 \right)$$

where:

$\varepsilon$ = emissivity of curtain walls

$\sigma = 5.67 + 10^{-8}$ W/ (m² K⁴), that is Stefan-Boltzman constant.

$T_{sky}$ = radiant temperature of the sky, expressed in K; $T$ = temperature of the surface exposed to the sky, in K.

As it is known, "curtain wall" is the perimetral enclosure wall of a constructed building, for example with a three-dimensional framework structure (generally made of steel or reinforced concrete).

The expression of Q mentioned above provides, for each exposed curtain wall, to use both its specific emissivity and the so called view coefficient dependent on the actual sky portion seen by the exposed surface.

Radiant temperature of the sky can be approximated by the simplified Swinbank's relation:

$$T_{sky} = 0.0552 \cdot T_{air}^{1,5}$$

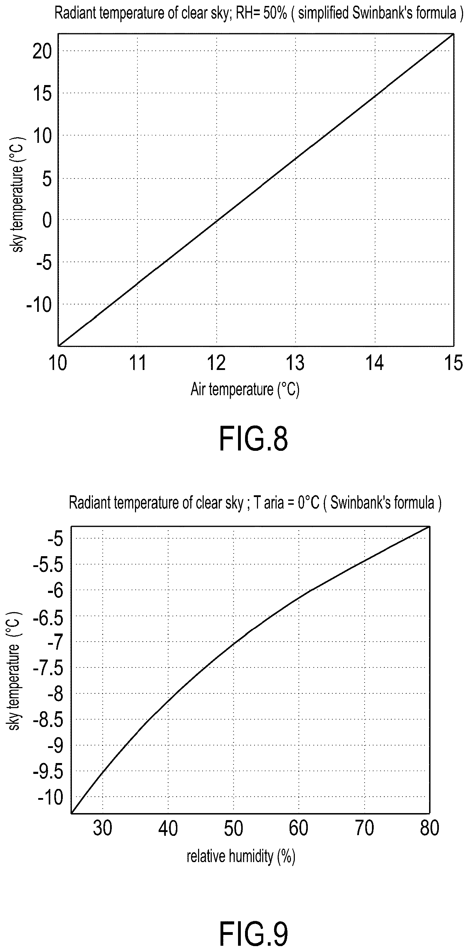

which is represented in the graph of fig.8, which is in good agreement with the same extended formula that takes also the relative humidity into account, shown in fig.9.

As already disclosed, data transmitted from the net radiometer RADn and received by the control-command module MCP allow a regulation law of the air conditioning plant 3, such as a heating radiator thermal system, to be modified.

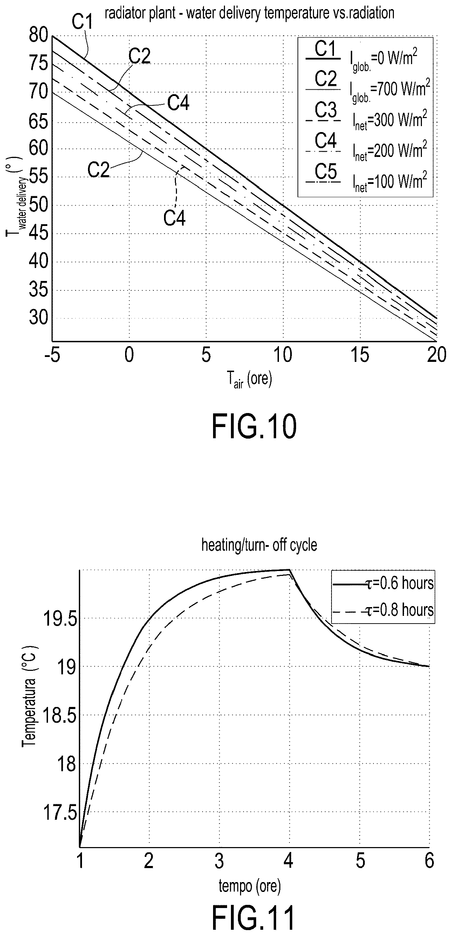

With reference thereto, fig.10 shows different thermoregulation curves of a heating radiator thermal system 3. Fig. 10 shows five curves (C1-C5) of the delivery temperature of water, related to different global radiation values and net radiation values.

As the positive net radiation increases, outside temperature being the same, the delivery temperature of water sent to radiators decreases, till going near the minimum value set on the thermoregulation curve (C2) provided in the case of maximum global solar radiation, in the example set at 700

Said value is anyway set automatically by the control-command module MCP and it is the maximum daily value measured over time on horizontal surface in the location of installation of the device.

It has to be noted that thermoregulation acts in inverse manner in case of summer cooling, with the temperature of cooled water - if it is for example the heat transfer fluid - that is increased when irradiation and positive net radiation decrease.

Such possibilities of selecting the regulation laws of the control system 2, related to the use of the net radiometer RADn, are very important when air conditioning systems - particularly those made in buildings prior to 1970 - are not provided with temperature detectors in environments able to provide feedback information to the control systems.

Now make reference to the change of criteria for attenuating and/or turning off the actuators of the air condition plant 3, in relation to the change in net radiation. A change that can be carried out by the control-command module MCP.

Energy input of the radiation reduces the request, for example under winter heating conditions, of energy provided by the thermal system whose time constant:

$$\tau = \frac{m \cdot c_p}{H \cdot S}$$

is virtually modified in relation to the lower emissivity of heating bodies with respect to the environment that, by using external radiation inputs, need less energy from the plant.

From the graph of fig.11, obtained by a simulation of the algorithm resident in the control-command module MCP, it is found that an increase of the time constant of the plant corresponds to less energy required to the thermal plant (final delivery temperatures being the same, e.g. ≈20°C, starting from a lower initial temperature, for example present when turning the plant on again after a daytime attenuation period). In Fig.11 the intermediate step maintaining the plant in regular operation between the two cycles represented in the figure was omitted to simplify the representation.

3. Estimate of the amount of water in the air

As already mentioned, the humidity probe UMRe is capable of measuring relative humidity of external air. The fact of knowing the relative humidity, together with the external temperature, allows the algorithm resident in the control-command module MCP to calculate the real amount of water in the air.

The algorithm used for such calculation employs the Clausius-Clapeyron equation for calculating the saturation vapour pressure as a function of temperature:

$$\varepsilon_s = \varepsilon_o \cdot \exp\left[\frac{L}{R_p} \cdot \left(\frac{1}{T_o} - \frac{1}{T}\right)\right]$$

with:

$\varepsilon_0$= 0.611 kPa
$L$ = 2.5 x10$^6$ J/kg
$R_p$= 461 J/(K kg)
$To$ = 273 K
$T$ = air temperature, expressed in K

to calculate the vapor pressure by the ratio expressed by:

$$e = \frac{\varepsilon_s \cdot RH}{100}$$

where:
$RH$ = relative humidity expressed in percentage.
The amount of water vapor in the air is given by the ratio:

$$r = \frac{\varepsilon \cdot e}{P - e}$$

with:

$\varepsilon$= 0.622 vapor grams/dry air grams;
$P$ = atmospheric pressure

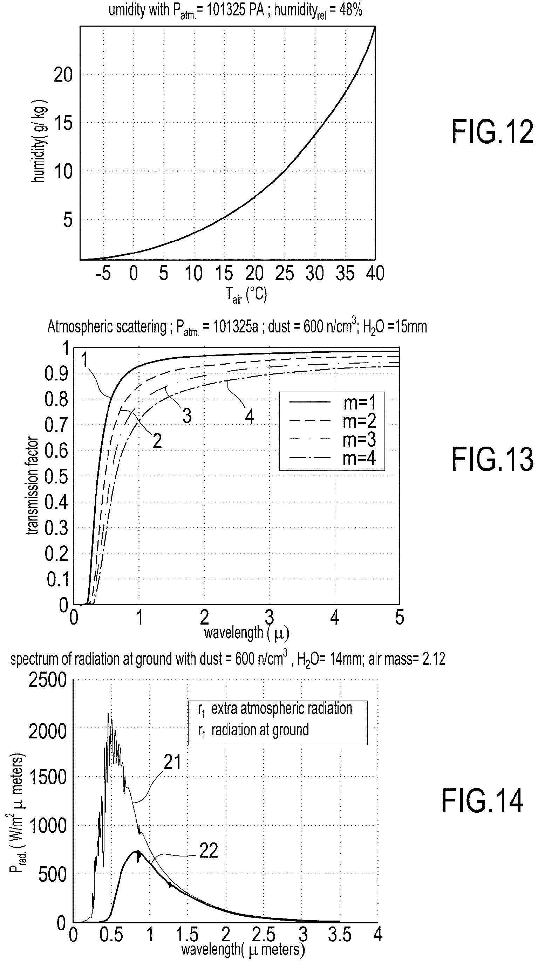

An example of the criterion for calculating the amount of water vapor is shown in the diagram of fig.12, for example developed for a given relative humidity and as a function of the change in air temperature.
The amount of water vapor in the air is a parameter that advantageously is used by the control-command module MCP for analysing both the sky temperature and the spectral composition of natural day light.

4. Optical filters of the solar probe: analysis of the spectral composition

An algorithm resident in the control-command module MCP is able, by using information about quality of external air (for example relative humidity) coming from other performed calculations already described and from acquired measurements, to analyse the spectral composition of light and therefore to determine the quality, specifically R-G-B energy components.
The algorithm analysing the spectral composition was developed considering:

• Planck's law, according to Dunkle's modified theory for radiation from blackbody

• Transmission factor of direct radiation by atmosphere, that can be expressed by the following formula about atmospheric "scattering" according to Rayleigh:

$$\tau_{a\lambda} = 10^{-0.00389 \cdot \lambda^{-4}}$$

wherein $\tau_{\alpha\lambda}$ is monochromatic transmission at wavelength $\lambda$ and $\lambda$ is the wavelength expressed in micron;

• the transmission factor of direct radiation by dust, according to the formula developed by Moon for a standard dust concentration of 800 p/cm$^3$:

$$\tau_{d\lambda} = 10^{-0.0353 \cdot \lambda^{-0.75}}$$

wherein $\tau_{d\lambda}$ is monochromatic transmission at wavelength $\lambda$ (expressed in micron);
• transmission factor of direct radiation by water vapour:

$$\tau_{w\lambda} = 10^{-0.0075 \cdot \lambda^{-2}}$$

wherein:

$\tau_{w\lambda}$ = monochromatic transmission at wavelength $\lambda$ (expressed in micron);

Therefore we obtain a total transmission factor, as represented by Duffie-Beckman, given by:

$$\tau_{\lambda(s)} = \left[ \left(\tau_{\alpha\lambda}\right)^{\left(\frac{p}{101325}\right)} \cdot \left(\tau_{d\lambda}\right)^{\left(\frac{d}{800}\right)} \cdot \left(\tau_{w\lambda}\right)^{\left(\frac{w}{20}\right)} \right]^{m}$$

with:

- $\tau_{\lambda(s)}$ : monochromatic transmission at wavelength $\lambda$ (expressed in micron)

- $m$ : air mass

- $p$: atmospheric pressure in Pa

- $d$: concentration of dust in particles/cm$^3$

- $w$: amount of water vapour in mm (can be calculated as above mentioned).

Graphs of fig.13 represent a simulation of the above mentioned algorithm and, in particular, show the transmission factor associated to "atmospheric scattering" with different tilts of the sun radiation with respect to the horizon.
Fig.14 shows a representation of the sun energy spectrum at ground (r2), in the day considered for the simulation, and compared with the extra-atmospheric one (r1).
For the graphs of fig.14 the following exemplificative values were considered:

- solar radiation at ground in the visible range 0.38-0.78 micron equal to 137.69 W/m$^2$;
- solar energy in the range 0.385-0.555 micron (B) equal to 12.01 W/m$^2$ (band centre 470 micron);
- solar energy in the range 0.432-0.615 micron (G) equal to 33.70 W/m$^2$ (band centre 524 micron);
- solar energy in the range 0.565-0.781 micron (R) equal to 122.16 W/m2 (band centre 624 micron)

It has to be noted that in the shown case the sum of energies of the three bands in examination is higher than the total one considering the superimposition of limits of the bands themselves.
The calculation of the spectral composition of light allows the control-command module MCP to generate command signals allowing lighting elements ILL to generate light having such spectral components to obtain both the desired lighting and an energy saving.

5. Particular embodiments of the control-command module MCP

As it also results from the description above, the control-command module MCP, for example made by a microprocessor, is provided with interface cards able to acquire signals and measurements of the external and internal environment and, particularly, the measurement of the external net radiation supplied by the net radiometer RADn. Particularly the control-command module MCP is able to receive and acquire in real time the detection signals generated by each sensor of the plurality Sn.
According to a particular embodiment the control-command module MCP acquires (for example by a network connection or a "wi-fi" connection):

- electric consumptions of equipment that are part of air conditioning systems or also process ones (e.g.: pumps, fans, burners, heat pump, devices of the fan coil unit type, air treating units, compressors, etc.);
- fuel consumptions (e.g.: network natural gas, gas oil, fuel oil, etc);
- electric consumptions of lighting systems (e.g.: so called conventional lighting, lighting with multicolor led systems, etc.)

Moreover the control-command module MCP stores signals, data and information mentioned above and it processes them, according to respective algorithms.

Moreover as already mentioned the control-command module MCP modifies in real-time the control laws of the air conditioning plant 3 and also of the lighting system such to save primary energy, electric energy and/or energy deriving from fossil fuels.

For example the control-command module MCP sends the command signals to the plant control module QCg which in turn controls the actuators ATT of the air conditioning and/or lighting systems. The plant control module QCg can be provided with a microprocessor and/or with signal transducing cards.

Preferably the control-command module MCP stores in a database control data, signals and information received, together with parameters of programmed control laws, also for diagnostic/maintenance purposes.

Advantageously at the end of each day, or selected period, the control-command module MCP calculates the actual achieved saving with respect to management criteria that otherwise would be used if the SBE device was not present.

According to a particular example, the control-command module MCP calculates in real-time, by means of the ratio of consumptions to operating hours, the efficiency of system equipment (e.g. pumps, burners, fans, etc.).

Moreover advantageously the control-command module MCP calculates in real-time the efficiency of plants, by calculating the ratio of energy consumption (e.g.: fuel flow rate resulting by reading the meter) to energy actually supplied to the air conditioning plant (e.g.: metering the flow rates of the thermo-refrigerating fluid multiplied by the temperature difference between outflow and return of the fluid itself).

It has to be noted that the control system 2 is particularly advantageous since it allows a considerable energy saving to be obtained. The use of the net radiometer RADn, above all during night time, allows the control-command module MCP to modify a preset regulation law and to use a regulation law that considers, for energy saving purposes, the actual energy exchanged by the body to be air conditioned with the sky.

It has to be noted also that the calculation of the spectral composition of light, obtained from the solar probe SUN and by means of optical filters FR, FG and FB allows the control-command module MCP to generate command signals that allow both the desired lighting and energy saving to be obtained.

Moreover it has to be noted that energy saving offered by the control system 2 is particularly important if the system controls several air conditioning plants and/or lighting plants. In this case the control system 2 can distribute resources among the several buildings based on a precise energy balance, thus avoiding waste.

**Claims**

1. Control system (2) for an air-conditioning plant (3), comprising:

   a plurality of sensors (Sn) for detecting physical parameters regarding a body to be air-conditioned and/or an environment surrounding said body, and for generating corresponding detection signals;
   a control-command module (MCP) configured to modify regulation laws as a function of detection signals, and to generate command signals to be supplied to actuator modules (ATT) of an air-conditioning plant (3) for the body;
   **characterized in that**:

   the plurality of sensors (Sn) comprises: a net radiometer (RADn) configured to supply a first detection signal representative of a difference between a first electromagnetic radiation from the sky and a second electromagnetic radiation from a surface of said body to be air-conditioned; and further **characterized in that** the control-command module (MCP) is configured to modify one of said regulation laws and/or define regulation laws such to reprogram turn-on and/or turn-off and/or attenuation times of said actuator modules (ATT) with reference to an energy stored or lost from the body, obtained from the first detection signal.

2. Control system (2) according at least to claim 1, wherein:

   the plurality of sensors (Sn) further comprises a solar probe (SUN) configured to detect a solar radiation and supplying a second detection signal;
   the control-command module (MCP) is configured to combine the first and second detection signals and obtain data regarding the radiant energy retained by said body.

3. Control system (2) according at least to claim 1, wherein the control-command module (MCP) is configured to:

   generate command signals to be supplied to an actuator module (ATT) of a heating/cooling thermal plant;

modify the regulation laws so that, as a net positive radiation indicated by the first detection signal increases, it causes a decrease/increase of a water delivery temperature of the heating/cooling thermal plant, respectively.

4. Control system (2) according at least to claim 2, wherein:

said plurality of sensors (Sn) further comprises: a temperature probe (TMPe) configured to measure temperature values of the air outside the body, and to deliver them to the control-command module (MCP), and a humidity probe (UMRe) configured to measure relative humidity values of the air outside the body and to deliver them to the control-command module (MCP);
wherein the control-command module (MCP) is configured to receive the temperature and humidity values and to evaluate a temperature of the sky and a spectral composition of the outside light.

5. Control system (2) according at least to claim 2, wherein:

the system further comprises: a red optical filter (FR), a green optical filter (FG), a blue optical filter (FB) mounted to a rotatable supporting structure (4) capable of alternatively associating one of said optical filters to the solar probe (SUN) to detect corresponding filtered solar radiations;
the control-command module (MCP) is also configured to generate further command signals to be supplied to actuator modules (ILL) of a lighting plant associated to said body; said further command signals being dependent on said filtered radiations.

6. Control system (2) according at least to claim 5, further comprising:
a motor (Mpp) coupled to the supporting structure (4) to cause it to rotate and to dispose a single filter of the red optical filter (FR), green optical filter (FG) and the blue optical filter (FB) in order to filter the radiation hitting the solar probe.

7. Control system (2) according at least to claim 1, wherein said body to be air-conditioned is a building, a greenhouse or an open area in a field.

8. Control system (2) according at least to claim 1, wherein the control-command module (MCP) is configured to:

execute a calculation for estimating the net radiation based on: an emissivity of a surface associated to the body to be air-conditioned, a radiant temperature of the sky and a temperature of the surface exposed to the sky;
compare the estimate of the net radiation with a measured net radiation value, associated with the first detection signal supplied by the net radiometer;
validate the measured net radiation value following the comparison with the calculated net radiation estimate.

9. Control system (2) according to at least one of the preceding claims, wherein the control-command module (MCP) is configured to monitor and control a plurality of air-conditioning and/or lighting plants associated with different bodies to be air-conditioned and/or lighted.

**Patentansprüche**

1. Steuerungssystem (2) für eine Klimatisierungsanlage (3), umfassend eine Vielzahl von Sensoren (Sn) zum Erfassen physikalischer Parameter bezüglich eines zu klimatisierenden Körpers und/oder einer diesen Körper umgebenden Umgebung und ein Steuer-/Befehlsmodul (MCP) zum Erzeugen entsprechender Erfassungssignale, das so konfiguriert ist, dass es Regelungsgesetze in Abhängigkeit von Erfassungssignalen modifiziert und zum Erzeugen von Befehlssignalen, die an Aktuatormodule (ATT) einer Klimatisierungsanlage (3) für den Körper weitergegeben werden;
**dadurch gekennzeichnet, dass** die Vielzahl von Sensoren (Sn) folgendes umfasst:

ein Strahlungsbilanzsensor (RADn), das so konfiguriert ist, dass es ein erstes Erfassungssignal liefert, das eine Differenz zwischen einer ersten elektromagnetischen Strahlung vom Himmel und einer zweiten elektromagnetischen Strahlung von einer Oberfläche des zu klimatisierenden Körpers darstellt;
und ferner **dadurch gekennzeichnet, dass** das Steuer-/Befehlsmodul (MCP) so konfiguriert ist, dass es eines der Regelungsgesetze modifiziert und/oder Regelungsgesetze definiert, um Einschalt- und/oder Ausschalt- und/oder Dämpfungszeiten der Aktuatormodule (ATT) in Bezug auf eine gespeicherte oder verlorene Energie des Körpers, die aus dem ersten Erfassungssignal erhalten wird, neu zu programmieren.

2. Steuerungssystem (2) nach mindestens Anspruch 1, wobei:

Die Mehrzahl von Sensoren (Sn) ferner eine Sonnensonde (SUN) umfasst, die so konfiguriert ist, dass sie Sonnenstrahlung erfasst und ein zweites Erfassungssignal liefert;
das Steuer-/Befehlsmodul (MCP) so konfiguriert ist, dass es das erste und das zweite Erfassungssignal kombiniert und Daten bezüglich der von dem Körper zurückgehaltenen Strahlungsenergie erhält.

3. Regelsystem (2) nach mindestens Anspruch 1, wobei das Steuer- und Regelmodul (MCP) konfiguriert ist, um:

Befehlssignale zu erzeugen, die einem Aktuatormodul (ATT) einer thermischen Heiz-/Kühlanlage zuzuführen sind;
die Regelungsgesetze so zu modifizieren, dass sie bei einem Anstieg einer durch das erste Erfassungssignal angezeigten positiven Nettostrahlung eine Absenkung/Erhöhung einer Wasserabgabetemperatur der thermischen Heiz-/Kühlanlage bewirken.

4. Steuerungssystem (2) mindestens nach Anspruch 2, wobei:
Die Mehrzahl von Sensoren (Sn) ferner umfasst:
Eine Temperatursonde (TMPe), die konfiguriert ist, um Temperaturwerte der Luft außerhalb des Körpers zu messen und an das Steuer-Befehlsmodul (MCP) zu liefern, und eine Feuchtigkeitssonde (UMRe), die konfiguriert ist, um relative Feuchtigkeitswerte der Luft außerhalb des Körpers zu messen und an das Steuer-Befehlsmodul (MCP) zu liefern; wobei das Steuer-Befehlsmodul (MCP) konfiguriert ist, um die Temperatur- und Feuchtigkeitswerte zu empfangen und eine Temperatur des Himmels und eine spektrale Zusammensetzung des Außenlichts auszuwerten.

5. Steuerungssystem (2) nach mindestens Anspruch 2, wobei:
Das System ferner umfasst:

Ein rotes optisches Filter (FR), ein grünes optisches Filter (FG), ein blaues optisches Filter (FB), die an einer drehbaren Trägerstruktur (4) angebracht sind, die in der Lage ist, abwechselnd eines der optischen Filter der Sonnensonde (SUN) zuzuordnen, um entsprechende gefilterte Sonnenstrahlungen zu erfassen;
das Steuer-/Befehlsmodul (MCP) auch konfiguriert ist, um weitere Befehlssignale zu erzeugen, die an Aktuatormodule (ILL) einer dem Körper zugeordneten Beleuchtungsanlage zu liefern sind;
wobei die weiteren Befehlssignale von den gefilterten Strahlungen abhängig sind.

6. Steuersystem (2) nach mindestens Anspruch 5, ferner umfassend:
einen Motor (MPP), der mit der Tragstruktur gekoppelt ist (4), um diese in Drehung zu versetzen und ein einzelnes Filter aus dem roten optischen Filter (FR), dem grünen optischen Filter (FG) und dem blauen optischen Filter (FB) zur Verfügung zu stellen, um die auf die Sonnensonde treffende Strahlung zu filtern.

7. Steuerungssystem (2) mindestens nach Anspruch 1, wobei der zu klimatisierende Körper ein Gebäude, ein Gewächshaus oder ein offener Bereich auf einem Feld ist.

8. Steuersystem (2) nach mindestens Anspruch 1, wobei das Steuer-/Befehlsmodul (MCP) konfiguriert ist, um:
Einer Berechnung zur Abschätzung der Nettostrahlung basierend auf:

Einem Emissionsgrad einer dem zu klimatisierenden Körper zugeordneten Oberfläche, einer Strahlungstemperatur des Himmels und einer Temperatur der dem Himmel ausgesetzten Oberfläche, durchzuführen;
Vergleichen der Schätzung der Nettostrahlung mit einem gemessenen Nettostrahlungswert, der dem ersten Erfassungssignal zugeordnet ist, das von dem Strahlungsbilanzsensor geliefert wird;
Validieren des gemessenen Nettostrahlungswertes nach dem Vergleich mit der berechneten Nettostrahlungsschätzung.

9. Steuersystem (2) nach mindestens einem der vorhergehenden Ansprüche, wobei das Steuer- und Regelmodul (MCP) so konfiguriert ist, dass es eine Vielzahl von Klima- und/oder Beleuchtungsanlagen überwacht und steuert, die verschiedenen zu klimatisierenden und/oder zu beleuchtenden Körpern zugeordnet sind.

**Revendications**

1. Système de contrôle (2) pour une installation de conditionnement d'air (3), comprenant :

    une pluralité de capteurs (Sn) pour détecter des paramètres physiques concernant un corps dont l'air est à conditionner et/ou un environnement entourant ledit corps, et pour générer des signaux de détection correspondants ;
    un module de contrôle-commande (MCP) configuré pour modifier des lois de régulation en fonction de signaux de détection, et pour générer des signaux de commande à délivrer à des modules d'actionneur (ATT) d'une installation de conditionnement d'air (3) pour le corps ;
    **caractérisé par le fait que** :
    la pluralité de capteurs (Sn) comprend : un radiomètre différentiel (RADn) configuré pour délivrer un premier signal de détection représentatif d'une différence entre un premier rayonnement électromagnétique provenant du ciel et un second rayonnement électromagnétique provenant d'une surface dudit corps dont l'air est à conditionner ; et **caractérisé en outre par le fait que** le module de contrôle-commande (MCP) est configuré pour modifier l'une desdits lois de régulation et/ou définir des lois de régulation de manière à reprogrammer des temps de mise sous tension et/ou de mise hors tension et/ou d'atténuation desdits modules d'actionneur (ATT) par référence à une énergie stockée dans ou perdue par le corps, obtenue à partir du premier signal de détection.

2. Système de contrôle (2) selon au moins la revendication 1, dans lequel :

    la pluralité de capteurs (Sn) comprend en outre une sonde solaire (SUN) configurée pour détecter un rayonnement solaire et délivrer un second signal de détection ;
    le module de contrôle-commande (MCP) est configuré pour combiner les premier et second signaux de détection et obtenir des données concernant l'énergie rayonnante retenue par ledit corps.

3. Système de contrôle (2) selon au moins la revendication 1, dans lequel le module de contrôle-commande (MCP) est configuré pour :

    générer des signaux de commande à délivrer à un module d'actionneur (ATT) d'une installation thermique de chauffage/refroidissement ;
    modifier les lois de régulation de telle sorte qu'à mesure qu'un rayonnement positif différentiel indiqué par le premier signal de détection augmente, il entraîne une augmentation/diminution d'une température de distribution d'eau de l'installation thermique de chauffage/refroidissement, respectivement.

4. Système de contrôle (2) selon au moins la revendication 2, dans lequel :

    la pluralité de capteurs (Sn) comprend en outre :

        une sonde de température (TMPe) configurée pour mesurer des valeurs de température de l'air à l'extérieur du corps, et pour délivrer celles-ci au module de contrôle-commande (MCP), et
        une sonde d'humidité (UMRe) configurée pour mesurer des valeurs d'humidité relative de l'air à l'extérieur du corps, et pour délivrer celles-ci au module de contrôle-commande (MCP) ;

    le module de contrôle-commande (MCP) étant configuré pour recevoir les valeurs de température et d'humidité et pour évaluer une température du ciel et une composition spectrale de la lumière extérieure.

5. Système de contrôle (2) selon au moins la revendication 2, dans lequel :

    le système comprend en outre : un filtre optique rouge (FR), un filtre optique vert (FG), un filtre optique bleu (FB) montés sur une structure de support rotative (4) capable d'associer alternativement l'un desdits filtres optiques à la sonde solaire (SUN) pour détecter des rayonnements solaires filtrés correspondants ;
    le module de contrôle-commande (MCP) est également configuré pour générer d'autres signaux de commande à délivrer à des modules d'actionneur (ILL) d'une installation d'éclairage associée audit corps ; lesdits autres signaux de commande dépendant desdits rayonnements filtrés.

6. Système de contrôle (2) selon au moins la revendication 5, comprenant en outre :

un moteur (Mpp) couplé à la structure de support (4) pour l'amener à tourner et pour disposer un seul filtre parmi le filtre optique rouge (FR), le filtre optique vert (FG) et le filtre optique bleu (FB) afin de filtrer le rayonnement frappant la sonde solaire.

7. Système de contrôle (2) selon au moins la revendication 1, dans lequel ledit corps dont l'air est à conditionner est un bâtiment, une serre ou une zone ouverte dans un champ.

8. Système de contrôle (2) selon au moins la revendication 1, dans lequel le module de contrôle-commande (MCP) est configuré pour :

exécuter un calcul pour estimer le rayonnement différentiel sur la base : d'une émissivité d'une surface associée au corps dont l'air est à conditionner, d'une température rayonnante du ciel, et d'une température de la surface exposée au ciel ;
comparer l'estimation du rayonnement différentiel avec une valeur de rayonnement différentiel mesurée, associée au premier signal de détection délivré par le radiomètre différentiel ;
valider la valeur de rayonnement différentiel mesurée suite à la comparaison avec l'estimation de rayonnement différentiel calculée.

9. Système de contrôle (2) selon au moins l'une des revendications précédentes, dans lequel le module de contrôle-commande (MCP) est configuré pour surveiller et contrôler une pluralité d'installations de conditionnement d'air et/ou d'éclairage associées à différents corps dont l'air est à conditionner et/ou à éclairer.

FIG.1

EP 3 217 111 B1

FIG.2

EP 3 217 111 B1

## FIG.3

sun declination throughout the year (simplifed Cooper's formula)

extra-atmosferic solar power

## FIG.4

sun elevation at horizon; day = 308

FIG.5

air mass ( passed through in teh atmosphere ) ; day = 308

FIG.6

solar radiation ; day = 308

FIG.7

Radiant temperature of clear sky; RH= 50% ( simplified Swinbank's formula )

## FIG.8

Radiant temperature of clear sky ; T aria = 0°C ( Swinbank's formula )

## FIG.9

radiator plant - water delivery temperature vs.radiation

FIG.10

heating/turn- off cycle

FIG.11

umidity with $P_{atm.}$= 101325 PA ; humidity$_{rel}$ = 48%

FIG.12

Atmospheric scattering ; $P_{atm.}$ = 101325a ; dust = 600 n/cm$^3$; $H_2O$ =15mm

FIG.13

spectrum of radiation at ground with dust = 600 n/cm$^3$ , $H_2O$= 14mm; air mass= 2.12

FIG.14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2065655 A
- EP 1866575 A
- US 2004245351 A